# EUROPEAN PATENT SPECIFICATION

(11) **EP 4 261 613 B1**
(45) Date of publication and mention of the grant of the patent: **09.12.2026**
(21) Application number: 23165556.4
(22) Date of filing: 30.03.2023
(51) Int. Cl.: G03B 17/55, G03B 17/08, H04N 23/51, H04N 23/50, G03B 37/00

(54) **CONTAINER FOR VIDEO OR PHOTOGRAPHIC IMAGE-TAKING APPARATUSES**
BEHÄLTER FÜR VIDEO- ODER FOTOGRAFISCHE BILDAUFNAHMEGERÄTE
RÉCIPIENT POUR APPAREILS DE PRISE DE VUES VIDÉO OU PHOTOGRAPHIQUE

(30) Priority: 15.04.2022 IT 202200007619
(43) Date of publication of application: 18.10.2023
(73) Proprietor: Marelli Europe S.p.A., 20011 Corbetta (MI) (IT)
(72) Inventor: MARCHETTI, Massimo, I-20011 Corbetta (Milano) (IT)
(74) Representative: Buzzi, Notaro & Antonielli d'Oulx S.p.A.

(56) References cited:
- CN-A- 108 871 018
- CN-U- 213 513 973
- DE-B4- 102011 122 771
- KR-B1- 101 140 863

## Description

The present invention relates to a container for video or photographic image-taking apparatuses including a casing that comprises a housing for housing an image-taking apparatus, said casing including a transparent window, for example made of glass or plastic, an inner surface of which faces a lens of said image-taking apparatus.

### Prior art

Apparatuses for acquiring videos or photographic images, i.e., for example films or photographs, respectively, such as video cameras or photographic cameras, may need to be inserted into containers, for example to protect them when they are used in an environment that may damage them on account of the presence of harmful gases or temperature conditions.

Hence, in general, the image-taking apparatus is inserted into a container that has a wall, facing the lens of the image-taking apparatus itself, which comprises a transparent portion, thus, for example, a window made of glass, crystal, quartz, or transparent plastic material.

However, the conditions of temperature and humidity of the external environment operating in which is the image-taking apparatus housed in the container (which may, for example, be an environmental camera with an atmosphere controlled in terms of temperature and humidity for carrying out tests) may be such as to bring about an excessive heating or cooling of the image-taking apparatus, for example not compatible with the operating-temperature ranges of its electronic components. Moreover, in given weather conditions, condensate or frost may be formed on the optical parts, thus jeopardizing the quality of the images taken by the apparatus.

Documents KR 101 140 863 B1 and DE 10 2011 122771 B4 discloses solutions which are also relevant to the technical background discussed above.

The object of the present invention is to provide a container that will enable image-taking apparatuses to work in weather conditions that are critical for the characteristics of the apparatus itself, at the same time eliminating (or reducing) the effect of condensate or frost that might form on the optical parts.

According to the present invention, the above object is achieved by a container as defined in claim 1 and a corresponding method for operation of the container as defined in claim 9.

The invention will be described with reference to the annexed drawings, which are provided purely by way of non-limiting example and in which:
- Figure 1 is a schematic perspective view of an embodiment of the container described herein;
- Figure 2 is a lateral sectional view of the embodiment of the container of Figure 1;
- Figure 3A is a front view of a casing included in the container of Figure 1;
- Figure 3B is a front view of a transparent window comprised in the container of Figure 1;
- Figures 4A and 4B are a partial lateral sectional view and a perspective view, respectively, of elements of a variant embodiment of the container described herein.

In the ensuing description, one or more specific details are illustrated, aimed at enabling an in-depth understanding of examples of embodiments of this description. The embodiments may be obtained without one or more of the specific details, or with other methods, components, materials, etc. In other cases, known structures, materials, or operations are not illustrated or described in detail so that certain aspects of the embodiments will not be obscured.

Reference to "an embodiment" or "one embodiment" in the framework of the present description is meant to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to a specific embodiment. Moreover, particular conformations, structures, or characteristics may be combined in any adequate way in one or more embodiments.

The references used herein are provided merely for convenience and hence do not define the sphere of protection or the scope of the embodiments.

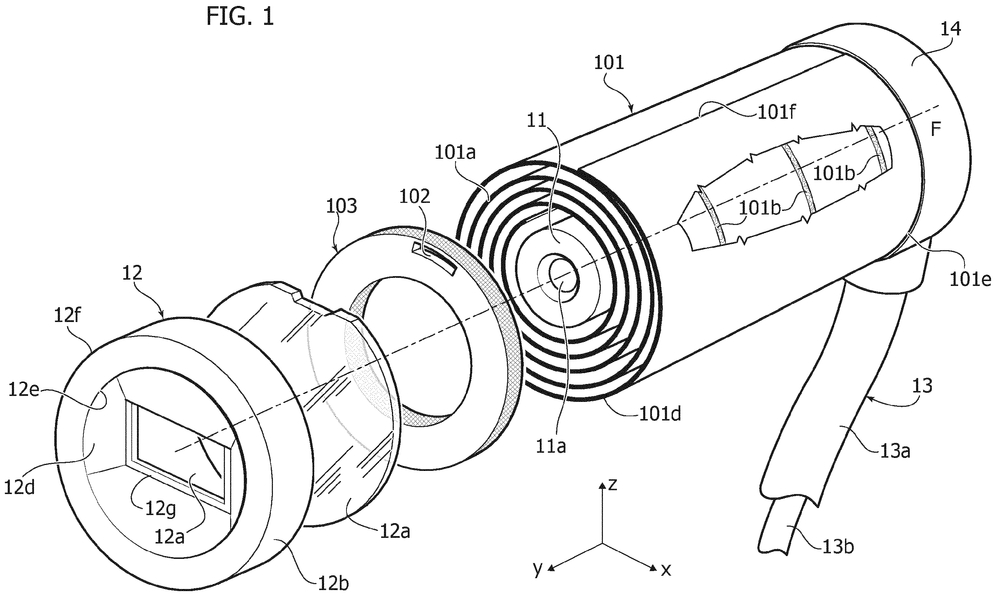

Figure 1 is a schematic perspective view of the container 10 for image-taking apparatuses described herein, which comprises a casing 100, having, in the example, a cylindrical shape, which is closed at the front and rear bases by a front cover 12 and rear cover 14, respectively. In Figure 1, the front cover 12 is illustrated separated from the front base of the cylinder defined by the casing 100 so that there can be seen, inside the casing 100, an image-taking apparatus 11, for example a video camera or a photographic camera, a lens 11a of which faces in the direction of the front cover 12; i.e., its optical axis F passes through the front cover 12.

Represented for convenience of reference in Figure 1 is a triad of cartesian axes comprising a horizontal axis X, substantially in the direction of the width of the cylinder defined by the casing 100, a horizontal optical axis Y, in the direction of depth, parallel to the optical axis F and to the longitudinal axis of the cylinder, and a vertical axis Z.

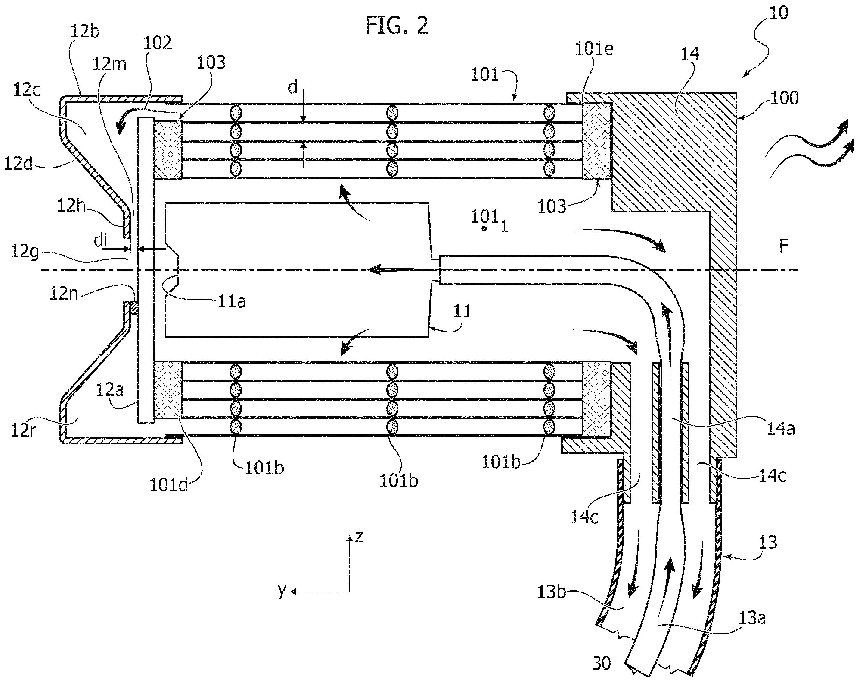

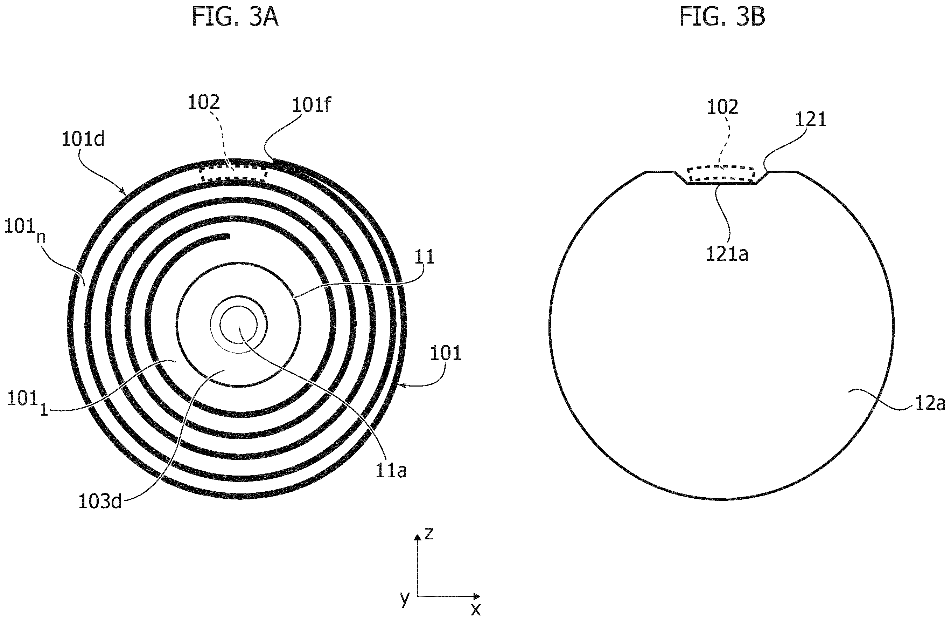

With reference also to Figure 2, where the container for image-taking apparatuses 10 is illustrated in lateral sectional view, i.e., sectioned through a vertical plane parallel to the plane YZ passing through the principal dimension of the container 10, i.e., the length of the cylinder defined by the casing 100, parallel to the axis Y, substantially corresponding to the optical axis F, and with reference to Figure 3A, where the casing 100 is illustrated in front view, the aforesaid casing 100 comprises a substantially rectangular sheet of rollable material, rolled up on itself 101 in a spiral about one of its dimensions, namely a rolling dimension, preferably the longer one of the sheet 101, i.e., the length (parallel to the axis Y in the example), so as to define a spiral-shaped path 101a between the walls of the facing turns. Such rollable material is resistant to the operating temperatures, is preferably a poor conductor of heat, for example polycarbonate or Teflon.

Positioned within a first innermost turn 101₁, which defines a cylindrical housing, is the image-taking apparatus 11. The first innermost turn 101₁ hence has a diameter greater than the maximum dimension of the image-taking apparatus 11, which is, for example, a Microsoft Life Cam webcam, in the direction normal to the axis of the cylindrical casing 100, which corresponds to the optical axis F. It should be noted that by the term "turn" is in general meant the part of spiral described by a complete turn about the pole of the spiral, which in this case lies substantially on the optical axis F. The first innermost turn 101₁ may hence correspond, for example, to the first turn of the spiral defined by the sheet 101, its diameter being, for instance, substantially a mean diameter. Other subsequent turns may be defined in a similar way, even though possibly the reference with respect to which the turn is calculated may be chosen differently.

As shown in Figure 1, starting from the first innermost turn 101₁, the rolled-up sheet 101 is wound a plurality of times about the aforesaid winding dimension to define a corresponding plurality of turns 101₁, ..., 101ₙ having a diameter increasing with the number of turns. The turns 101₁, ..., 101ₙ are not in contact with one another, except for the outermost turn, which is sealed on the preceding turn in a point 101f of the spiral-shaped path, i.e., along the edge of the rolled-up sheet 101, as illustrated in Figure 1, but are set apart by a distance d so as to define between them the spiral-shaped path 101a. For this purpose, spacers 101b are provided, obtained, for example, by setting one or more wires with a thickness substantially equal to said distance d and a distance between them, for example 2 cm, slightly smaller (to enable sealing of the outer part) than that of the sheet 101 in given positions along the dimension of winding, i.e., the length of the sheet 101. For example, as illustrated in Figure 1, these spacers are two wires 101b arranged approximately at one third and two thirds of the length of the sheet 101 in the direction perpendicular thereto. When the sheet 101 is wound, the above spacer wires 101b are located between the facing turns, thus making it possible to keep open a spiral-shaped path 101a for the passage of air, as illustrated in Figure 3, which shows the rolled-up sheet 101 in front view, i.e., the front base of the cylinder. For simplicity, the spacers 101b are not represented in Figure 3. Moreover, preferably the above wires 101b are not of constant thickness, but have restrictions, the thickness of which is smaller than the distance d, to render uniform the flow of air also in the longitudinal direction. For example, they are obtained with copper braids that have a substantially sinusoidal envelope, which hence leaves free gaps for the passage of air. The end of the sheet that corresponds to the outermost turn is sealed on the part of the sheet that forms the last (outermost) turn, thus defining a cylinder closed externally along its entire cylindrical surface.

The sheet 101 of the casing 100, wound on itself in a spiral, comprises two open faces 101d, 101e orthogonal to the winding axis, which corresponds to the main axis of the cylinder and to the optical axis F in the example. The faces 101d, 101e are closed, respectively, by the front cover 12 and by the rear cover 14.

On the turns along the two ends that constitute the two bases of the cylinder formed by the rolled-up sheet 101, is set a seal 103, obtained, for example, by applying between the turns a layer, for example of one or two millimetres of sealing material such as silicone or some other material compatible with the temperature and materials. This sealing cover 103 is applied only on the turns 101₁, ..., 101ₙ of the container 10, so as to seal the spiral-shaped path 101a, but not in a portion of face 103d corresponding to the inside of the innermost turn 101₁ where the optics of the image-taking apparatus 11 is located, as may be seen more clearly in Figure 3A. Moreover the seal leaves free an opening 102 provided between the last two outermost turns a little before the point of joining, or sealing, 101f. Hence, a cylindrical container is obtained with an outer surface sealed by the join between the last two turns, an inner surface that houses the image-taking apparatus, the first turns of which are separated by spacers and are hence open to the passage of air, and an opening 102 in the front base of the cylinder, between the last two turns, which allows exit of part of the air introduced into the cylinder, thus getting it to pass through all the turns.

On the front base 101d of the cylinder, a transparent window is applied, in the example in the form of a disk, 12a, of transparent material, for example glass or some other suitable transparent material, that covers and reinforces the seal 103, this transparent window 12a having a shape and dimensions such as to leave uncovered at least a portion 102 of the front face 101d in Figure 1 corresponding to the opening or passage 102 in the sealing layer 103. In other words, the transparent window 12a seals, for the front part of the cylinder that defines the container 101, the area in which the image-taking apparatus is housed. In preferred embodiments, in order to maximize the flow of air in the spiral-shaped path 101a towards the opening 102, the transparent window 12a, as illustrated in Figure 3B, covers the turns but has a shape such as to leave uncovered the opening 102 in a position corresponding to the outermost turn, or else has a radius slightly smaller than the distance of the opening 102 from the centre and in any case does not cover the opening 102 itself.

The image-taking apparatus 11 is arranged with a lens of its own the optical axis F of which lies substantially along the main axis of the container 10. On the side that the image-taking apparatus 11 faces, the container 10 is closed by the front cover 12, which comprises a circular frame, substantially in the form of a circular ring with an external diameter 12f and an internal diameter 12e, suited to being fitted and sealed, for example via a projecting part 12b on the portion corresponding to the external diameter 12f of the container 100 (here considered not taking in account the thickness of the wall of the frame) that projects in the direction perpendicular to the plane of the frame, towards the rolled-up sheet 101, on the base of the cylinder defined by the rolled-up sheet 101 coated with the sealing cover 103.

Within the circular frame, in particular within the internal diameter 12e, the cover 12 has a cup-shaped, i.e., substantially frustoconical, wall 12d, which is tapered along the optical axis F in the direction of the lens 11a and terminates in a plane bottom 12h, in the example substantially rectangular, which comprises along its perimeter a through opening 12g, in the example having a rectangular shape. The aforesaid through opening 12g and plane bottom 12h internally face the transparent window 12a, perpendicular to the optical axis F of the image-taking apparatus 11 and parallel to the aforesaid base 13d of the cylinder, which protects the lens 11a of the image-taking apparatus 11. The opening 12g is positioned in such a way as to be traversed by the optical axis F. The opening 12g has a shape and position such as to allow the lens 11 to frame completely its optical field. The transparent window 12a, as has been said, may in general also have a substantially circular shape with a diameter, for example, substantially comprised between the external diameter 12f and the internal diameter 12e of the circular ring defined by the cover 12. However, the shape of the transparent window 12a is such as to leave uncovered the opening 102 in the sealing cover 103 so as to allow the air to traverse the spiral-shaped path 101a and to exit towards the front cover 12. As indicated more clearly with reference to Figure 3B, for this purpose the transparent window 12a has, for example, a part of its perimeter that is flattened along a horizontal chord 121 (i.e., parallel to the plane XY). The above opening 102 has, for example, a width corresponding to a sector of approximately 10-20° of the circumference defined by the base 101d of the cylinder defined by the rolled-up sheet 101, and a position thereof is indicated in the lateral sectional view of Figure 2 and in the front view of Figure 3A (where the sealing cover 103 is not, however, illustrated for simplicity).

As may be seen more clearly in Figure 2, which is a lateral sectional view, along a vertical plane passing through the main axis of the cylinder defined by the rolled-up sheet 101 (here corresponding to the optical axis F), between the outer surface of the transparent window 12a and the inner surface of the front cover 12, since, as described, the cover 12 has a cup-shaped wall 12d, a top gap 12c is defined. In general, the cup-shaped wall 12d defines a gap all around the window 12a, but denoted by 12c is the top portion above the horizontal top side of the opening 12g. The through opening 12g is, on the other three sides, substantially in contact with the transparent window 12a (also using a ridge 12n as described hereinafter) while on the top side it remains at a distance therefrom of, for example, one or two tenths of a millimetre, thus defining a vertical duct 12m, i.e., with flow of the air parallel to the vertical axis Z, in the form of a slit with a width in the direction X much larger (at least by a factor 10) than the thickness in the direction Y (second distance di). In the example illustrated, the cover 12, between the larger diameter 12f and the smaller diameter 12e, has a vertical wall, at a first distance from the passage 102 of, for example, approximately 20 mm, whereas the opening 12g of the cover 12 is at a second distance di, less than the first distance, in the example of 0.1 mm, i.e., almost in contact with the transparent window 12a so that the circumference with the smaller diameter 12e is connected by the cup-shaped wall 12d, which in cross section appears as a wall oblique to the vertical plane bottom 12h, around the rectangular opening 12g. The oblique wall is, in particular, part of a substantially conical surface that connects the smaller diameter circle to the vertical plane region 12h, which is substantially a rectangular frame around the opening 12g and itself is at said second distance from the transparent window 12. Hence, a gap 12c is obtained with the transparent window 12a that, in the viewed in the lateral section of Figure 2, is wider at the passage 102 and narrower at the opening 12g, where the vertical plane region 12 defines, with the outer surface of the window 12a, an outlet mouth in the vertical direction (parallel to the axis Z), having the same width as the opening 12g. The plane bottom 12h that comprises the rectangular window 12g is in contact with the transparent window via a ridge 12n, for example approximately 0.1 mm, substantially equal to the second distance di, which runs along approximately three quarters of its perimeter, in the example a rectangular perimeter, hence along the bottom side and the lateral sides. In this way, the top side of the opening 12g remains at a distance from the window 12a (in particular, in the direction of the axis Y), thus forming an opening that defines the vertical duct 12m. The air that exits from the opening 102 and enters the gap 12c is forced to exit through the vertical duct 12m, thus creating a flow of air that is substantially much wider (in the direction X) than it is thick (in the direction Y), basically a blade of air that skims the surface of the transparent window 12a in just one direction, in the example from the top down along the axis Z. The vertical duct 12m has a small thickness, equal to the second distance di, for example 0.1 mm, so as to supply a jet of air at an increased speed as a result of the reduction in diameter. The width of the opening of the vertical duct 12m in the direction X, or orthogonal to the optical axis, is preferably equal to the width of the transparent window or a little less. In the example described, with a width of the cover 12 of 48 mm, the opening may, for instance, have a width 30 mm in the direction X. For clarity, for the purposes of the present description by "horizontal" are here meant the directions parallel to the optical axis F and by "vertical" the directions orthogonal thereto, and in the aforesaid vertical directions, by top or upward direction is meant the direction towards the position of the opening 102, and by "downwards" is the opposite direction. Of course, it is clear that the container 100 may then be set in any other position in space.

In variant embodiments, the cover 12 may have different shapes. However, it is shaped so as to form at the opening 12g a vertical conveying duct 12m, which is a portion of the gap 13c, which conveys the air in a direction parallel to the outer surface of the transparent window 12; i.e., the section of passage, or outlet section, of the outlet portion of the duct 12m lies in a plane substantially perpendicular to the outer surface of the transparent window 12a, and the perimeter of said outlet section is substantially tangential thereto; namely, the section of passage corresponding to the aforesaid outlet section, which is rectangular in the example, has its major side neighbouring on or tangential to the outer surface of the transparent window 12a.

As has been said, the transparent window 12a does not extend as far as to cover the opening 102; for example, it has a diameter smaller than the external diameter 12f of the cover 12 (but for the thickness of the wall of the cover 12) or else, as illustrated in Figure 3B, the circumference defined by the transparent window 12a is flattened by removing therefrom a part above a chord 121. This chord 121 may be at a height (height along the axis Z) corresponding to or smaller, for example, than the height of the lower part of the opening 102. In the example illustrated in Figure 3B, the chord 121 is at a height such that it would pass through said opening 102; consequently in an area corresponding to the opening 102 a shaping 121a of the chord line 121 is carried out so as to follow the perimeter of the opening 102 underneath the chord 121. In other variant embodiments, the transparent window 12a may have a shape and dimensions such as to cover the entire opening 102, and for example a passage shaped like a rectangular window, for instance, substantially congruent with the shape of the opening 102, is obtained in the transparent material of the window 12a if the characteristics of the transparent material, for example, so allow. In any case, the shape of the transparent window 12a is such as to allow the opening 102 to give out directly onto the gap 12c. Since the gap 12c is formed between the vertical walls of the cover 12 and of the transparent window 12a, a flow of air coming from the spiral-shaped path 101a is conveyed in the direction parallel to the aforesaid walls, and hence to the transparent window set in front of the lens, along the entire outer surface congruent with the opening 21g, eventually coming out in a vertical duct 12m that opens at the edge of the internal diameter of the cover 12, in the direction substantially tangential to the outer surface of the transparent window 12a.

On the rear part of the container 10, the turns 101₁, ..., 101ₙ are sealed to the rear cover 14 via the seal 103. The rear cover 14 has a connector that enables coupling to a delivery duct, or inlet duct, 13. In particular, the connector, which couples to an outer tube has a central hole 14a, through which an air-inlet tube 13a passes. On the connector itself, in the area comprised between the hole 14a and the seat for the tube 13b (which is concentric to the tube 13a) two or more holes 14c are provided appropriately sized to allow exit of approximately two thirds of the air introduced into the container (the remaining air will exit from the duct 12m).

The flow of air is hence conveyed by an inlet duct 13 (which is coupled via a rear cover 14) into the apparatus 11 in the innermost turn 101₁ of the rolled-up sheet 101. The base of the cylinder defined by the rolled-up sheet 101, opposite to the one that the lens of the image-taking apparatus 11 faces, i.e., the rear face 101e, is itself coated with a sealing cover 103, which, however, leaves free the inner surface to the innermost turn 101₁ through which the inlet tube 13 passes. The above air-inlet tube 13, as may be seen more clearly in Figure 2, is a coaxial tube that comprises an air-inlet inner tube 13a and an outer tube 13b, of larger diameter, which is coaxial to the inner tube 13a and contains it. The tube 13 is, for example, made of silicone, PVC or some other non-porous material, resistant to the operating temperatures. The above inlet tube 13 passes through the rear cover 14, which is a box-shaped body that comprises, in particular in its lower part as illustrated in Figure 2, an inlet through hole 14a (or channel, according to the axial length), which couples to the inner tube 13a for inlet of air into the innermost turn 101₁ where the image-taking apparatus 11 is located - in particular, the inner tube 13a is inserted, in the example illustrated, into the body of the apparatus 11; and an outer duct 14b, which couples to the coaxial outer tube 13b to allow a part of the air introduced to leave the container 10 through two or more through holes or channels 14c, defined between the inlet through hole 14a and the connector on which the tube 13b is fitted. Another part of the air introduced exits, as has been said, from the front cover 12.

Hence, in the container 10 described herein, the air 30, or a temperature-regulating gas, for example at room temperature (e.g., 25°C), is conveyed via inlet means, for example, via a pump, through the inner tube 13a. The cylindrical casing 100, as has been said, is obtained from a sheet 101 of plastic material wound in a spiral so as to define the spiral-shaped path 101a from the inside, where the tube 13 for the compressed air is connected, to the outside, i.e., towards the turns 101 with larger diameters. The container 10 is immersed in the environment 40 of the chamber, for example, a climatic chamber, that has a respective chamber temperature, for instance, 80°C.

The air 30 at room temperature (for example, 23°C) enters the image-taking apparatus 11, or arrives in its immediate vicinity, if the apparatus is fluid-tight, a part of this air 30 traverses the turns from the innermost turn, heating up (or cooling down if the temperature of the external environment 40 is lower) progressively in the spiral path 101a towards the outer turns, reaching a temperature close to that of the external environment 40, for example that of the chamber (e.g., 80°C). In this way, the apparatus 11 is kept at a temperature very close to that of the air 30 introduced, whereas the gap 12c conveys the air at a temperature close to the temperature of the external environment 40 along the outer surface of the transparent window 12a, preventing the drops of condensate from sticking to the latter. The fact that the temperature of the air blown is close to that of the outer surface of the transparent window minimizes formation of condensate thereon.

In the example described herein, the external diameter of the cover 12 is 48 mm, the length of the container 100 including the lids 12 and 14 is 110 mm, the camera 11 has a cylindrical body with a diameter of 25 mm, the distance d between the turns is 0.7 mm, and the distance of the vertical duct 12m is 0.1 mm.

Moreover, the casing 100 has a number n of turns equal to 6, and the pressure of the compressed air introduced is approximately 1 atm, which enables use of the device located in a climatic chamber at a chamber temperature ranging from -40°C to +90°C, with a relative humidity of 95% at 45°C, keeping the temperature of the internal camera 11 between 10°C and 50°C. The air 30 introduced into the inlet tube typically has a temperature of 25°C and is preferably filtered and dried to prevent any accumulation of particles of dust or water that might deposit on the optical parts of the device.

With reference to Figure 2, since the cover 12 is mainly formed by a circular frame, it defines a gap 12r in the lower part of the cover 12, having a shape substantially similar to that of the gap 12c. However, on said gap 12r, there does not give out a passage like the passage 102, and preferably the duct corresponding to the duct 12m is closed by a projecting portion, the ridge 12n, as illustrated in Figure 2. The aforesaid gap 12r may, however, be used for housing a heater, for heating the air that exits from the passage 102, where necessary. In variant embodiments, it is possible to provide a passage similar to the passage 102 also in the portion of outer turns facing the bottom gap 12r, leaving open the vertical air-conveying duct corresponding to the duct 12m. In general, since the cover has a symmetry of rotation and consequently also the gap has a toroidal shape, it is possible to provide one or more openings 102 in other points along the circumference of the outermost turns. In this case, it may be convenient either to orient the rectangle of the opening 12g and the rectangle of the plane bottom 12h accordingly or else to make these elements of a circular shape.

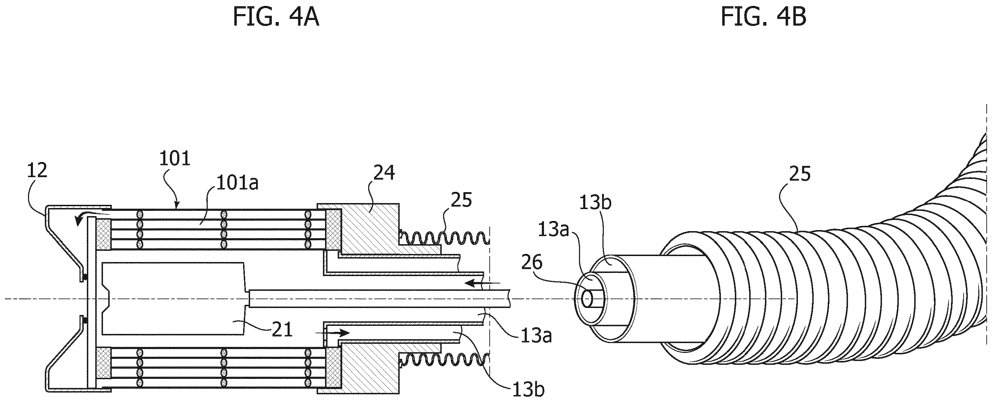

The system may be applied also to micro-cameras of an endoscope type by further reducing the spaces and the volume of air used, as in the embodiment illustrated in Figure 4.

Figure 4A is a lateral cross-sectional view of an embodiment of container 20 for an endoscope that comprises inside it a microcamera 21. Clearly, in this case, the dimensions are those of endoscopes, which have diameters for example comprised between 6 mm and 10 mm. Hence the container 20 may have a diameter of approximately 25 mm, but the dimensions may be different, for example according to whether use thereof is medical or industrial. Of course, those illustrated in the figures are embodiments provided by way of example, as are the applications mentioned. The solution described may also be applied to other fields of use, for example for aerospace or underwater purposes. Hence, in general, the cylindrical container 20 preferably has a diameter substantially corresponding to or less than that of an endoscope tube 25. From the standpoint of its structure, the cylindrical container 20 corresponds to the container 10 of Figure 1, except for the rear cover 24, which comprises a central opening 24 - i.e., central with respect to the rear face 101e and to the innermost turn 101₁ - so as to be coupled to an endoscope tube 25, which in the example is a semi-rigid corrugated tube, which comprises inside it the air-inlet tube 13, the inner tube 13a of which houses the supply cable 26 of the microcamera 21 and also a connecting optical fibre (not illustrated).

Specifically, the inlet duct 13 fits into the central opening 24. Figure 4B is a perspective view the endoscope tube 25.

Hence, from what has been described above, the advantages of the solution proposed emerge clearly.

According to a main aspect of the solution described herein, the spiral-shaped path of the container in which air passes between layers of plastic in itself insulates the temperature of image-taking apparatus from the temperature of the environment in which the container is set, keeping the apparatus at a temperature close to the temperature of the temperature-regulating gas, for example room temperature, in particular, for instance, 25°C.

The effect of insulation within the container described herein is not afforded by a static material but by the thermal transfer through various layers of material that make up the rolled-up sheet, with different thermal properties (e.g., plastic/air), one of which, the air, is constantly renewed and introduced into the spiral path at the given temperature at which the image-taking apparatus is to be kept.

As regards the gas introduced via the inlet duct 13a, there occurs recycling of the gas itself, which is partially re-directed, via the two or more holes 14c made in the connector of the rear cover 14, towards the gap that is formed between the inlet (inner) tube 13a and the coaxial outer tube 13b. This method considerably reduces the section (and the flexibility, where necessary) of the duct 13 itself.

The air conveyed for regulating the temperature of the image-taking apparatus is moreover advantageously used, at outlet from the spiral-shaped path, to eliminate any condensate that may be formed on the surface of the transparent window in the case where its temperature is lower than that of the working or chamber environment, outside the container, even in the case of high values of relative humidity.

## Claims

1. A container for video or photographic image-taking apparatuses comprising a casing (100) that includes a housing (101₁) for housing an image-taking apparatus (11; 21), said casing (100) comprising a transparent window (12a), an inner surface of which faces a lens of said image-taking apparatus (11; 21),
said container being **characterized in that**:
said casing (100) comprises a sheet (101) wound on itself in a spiral, in particular about a main axis thereof, so as to define between facing surfaces of its own a spiral-shaped path (101a), said housing (101₁) being comprised in the innermost turn of said spiral-shaped path (101a),
said container (10; 20) further comprising a delivery duct (13) coupled to said housing (101₁), in particular to said image-taking apparatus (11; 21), and configured to convey a temperature-regulating gas, in particular air, at a given regulating temperature, into said housing (101₁) and into said spiral-shaped path (101a).

2. The container according to claim 1, **characterized in that** said casing (100) wound on itself in a spiral comprises two open faces (101d, 101e) orthogonal to a winding axis (F), which are closed, respectively, by a front cover (12) and a rear cover (14), said transparent window (12a) being applied to cover at least said front open face (101d) in a region corresponding to said innermost turn (101₁) to close a front face of said housing, said transparent window (12a) having dimensions such as to leave uncovered at least a portion (102) of said front face (101d) and of the spiral-shaped path (101a), said front cover (12) comprising flow-directing means (12c) coupled to said uncovered portion (102) of the front face and configured to convey said gas, in particular air, from said spiral-shaped path (101a) along an outer surface of said transparent window (12a).

3. The container according to claim 2, **characterized in that** said flow-directing means (12c) comprise a gap defined between an inner surface of said front cover (12) and an outer surface of said transparent window (12a), said front cover (12) comprising an opening (12g), in particular through which an optical axis (F) of the image-taking apparatus (11; 21) passes, said front cover (12) being shaped so as to form at the opening (12g) a duct (12m), the section of passage of which lies in a plane substantially perpendicular to the outer surface of the transparent window (12a), and the perimeter of said section of passage is substantially tangential to the outer surface of the transparent window (12a).

4. The container according to claim 2, **characterized in that** it comprises a sealing layer (103) applied at least on said front open face (101d), in particular also on a rear outer face (101e) on which the transparent window (12a) is applied, a passage (102) in said sealing layer (103) applied on said front face (101d) being provided in an area corresponding to said uncovered portion (102) of front face and being coupled to said flow-directing means (12c).

5. The container according to any one of the preceding claims, **characterized in that** said delivery duct (13) comprises an inner duct (13a) for delivery of the regulating gas into said housing (101₁) and an outer duct (13b) coaxial to said inner duct (13a) for outlet of at least part of said regulating gas towards the outside.

6. The container according to claim 1, **characterized in that** it comprises spacers (101b) between the turns (101₁, ..., 101ₙ) to keep said turns (101₁, ..., 101ₙ) at a given distance (d), in particular said spacers (101b) comprising restrictions, having a thickness smaller than said given distance (d).

7. The container according to any one of the preceding claims, **characterized in that** said container is coupled to an endoscope tube (25) of said endoscope, which comprises within it said delivery duct (13), said container (20) having a diameter substantially corresponding to or smaller than the diameter of the endoscope tube (25), said casing (100) wound on itself in a spiral comprising two open faces (101d, 101e) orthogonal to a winding axis (F), which are closed, respectively, by a front cover (12) and a rear cover (14), the rear cover (24) comprising a central opening, i.e., central with respect to a rear face (101e) and to the innermost turn (101₁), for coupling to said delivery duct (13).

8. The container according to any one of the preceding claims, **characterized in that** said delivery duct (13) is coupled to means, in particular a pump, for inlet of a gas at a pre-set temperature, in particular room temperature.

9. A method for operation of the container (10) according to any one of claims 1 to 8, **characterized in** associating to said delivery duct (13) means, in particular a pump, for inlet of a gas at a regulating temperature, in particular room temperature,
adjusting the temperature of said image-taking apparatus (11) by adjusting said regulating temperature.

## Patentansprüche

1. Behälter für Video- oder Foto-Bildaufnahmevorrichtungen, umfassend ein Gehäuse (100), das ein Aufnahmegehäuse (101₁) zur Aufnahme einer Bildaufnahmevorrichtung (11; 21) einschließt, wobei besagtes Gehäuse (100) ein transparentes Fenster (12a) umfasst, dessen Innenfläche einer Linse besagter Bildaufnahmevorrichtung (11; 21) zugewandt ist,
wobei besagter Behälter **dadurch gekennzeichnet ist, dass**:
besagtes Gehäuse (100) eine Folie (101) umfasst, die auf sich selbst in einer Spirale gewickelt ist, insbesondere um eine Hauptachse derselben, um so zwischen einander zugewandten Oberflächen derselben einen spiralförmigen Pfad (101a) zu definieren, wobei besagtes Aufnahmegehäuse (101₁) in der innersten Windung besagten spiralförmigen Pfads (101a) enthalten ist,
wobei besagter Behälter (10; 20) ferner einen Zuführkanal (13) umfasst, der mit besagtem Aufnahmegehäuse (101₁), insbesondere mit besagter Bildaufnahmevorrichtung (11; 21), gekoppelt und dazu konfiguriert ist, ein temperaturregulierendes Gas, insbesondere Luft, bei einer gegebenen Reguliertemperatur in besagtes Aufnahmegehäuse (101₁) und in besagten spiralförmigen Pfad (101a) zu befördern.

2. Behälter nach Anspruch 1, **dadurch gekennzeichnet, dass** besagtes Gehäuse (100), das auf sich selbst in einer Spirale gewickelt ist, zwei offene Flächen (101d, 101e) orthogonal zu einer Wickelachse (F) umfasst, die jeweils durch eine vordere Abdeckung (12) und eine hintere Abdeckung (14) verschlossen sind, wobei besagtes transparentes Fenster (12a) so angebracht ist, dass es zumindest besagte vordere offene Fläche (101d) in einem Bereich entsprechend besagter innerster Windung (101₁) abdeckt, um eine vordere Fläche besagten Aufnahmegehäuses zu verschließen, wobei besagtes transparentes Fenster (12a) Abmessungen derart aufweist, dass zumindest ein Abschnitt (102) besagter vorderer Fläche (101d) und besagten spiralförmigen Pfads (101a) unbedeckt bleibt, wobei besagte vordere Abdeckung (12) strömungsleitende Mittel (12c) umfasst, die mit besagtem unbedeckten Abschnitt (102) der vorderen Fläche gekoppelt und dazu konfiguriert sind, besagtes Gas, insbesondere Luft, von besagtem spiralförmigen Pfad (101a) entlang einer Außenfläche besagten transparenten Fensters (12a) zu befördern.

3. Behälter nach Anspruch 2, **dadurch gekennzeichnet, dass** besagte strömungsleitende Mittel (12c) einen Spalt umfassen, der zwischen einer Innenfläche besagter vorderer Abdeckung (12) und einer Außenfläche besagten transparenten Fensters (12a) definiert ist, wobei besagte vordere Abdeckung (12) eine Öffnung (12g) umfasst, insbesondere durch die eine optische Achse (F) der Bildaufnahmevorrichtung (11; 21) verläuft, wobei besagte vordere Abdeckung (12) so geformt ist, dass sie an der Öffnung (12g) einen Kanal (12m) bildet, dessen Durchtrittsquerschnitt in einer Ebene im Wesentlichen senkrecht zur Außenfläche des transparenten Fensters (12a) liegt und der Umfang des Durchtrittsquerschnitts im Wesentlichen tangential zur Außenfläche des transparenten Fensters (12a) verläuft.

4. Behälter nach Anspruch 2, **dadurch gekennzeichnet, dass** er eine Dichtungsschicht (103) umfasst, die zumindest auf besagter vorderer offener Fläche (101d) aufgebracht ist, insbesondere auch auf einer hinteren Außenfläche (101e), auf der das transparente Fenster (12a) aufgebracht ist, wobei ein Durchlass (102) in besagter Dichtungsschicht (103), die auf besagter vorderer Fläche (101d) aufgebracht ist, in einem Bereich entsprechend besagtem unbedeckten Abschnitt (102) der vorderen Fläche vorgesehen und mit besagten strömungsleitenden Mitteln (12c) gekoppelt ist.

5. Behälter nach einem der vorhergehenden Ansprüche, **dadurch gekennzeichnet, dass** besagter Zuführkanal (13) einen Innenkanal (13a) zur Zuführung des regulierenden Gases in besagtes Aufnahmegehäuse (101₁) und einen Außenkanal (13b) koaxial zu besagtem Innenkanal (13a) zur Ableitung zumindest eines Teils besagten regulierenden Gases nach außen umfasst.

6. Behälter nach Anspruch 1, **dadurch gekennzeichnet, dass** er Abstandshalter (101b) zwischen den Windungen (101₁, ..., 101ₙ) umfasst, um besagte Windungen (101₁, ..., 101ₙ) in einem gegebenen Abstand (d) zu halten, wobei insbesondere besagte Abstandshalter (101b) Einschnürungen umfassen, die eine Dicke kleiner als besagter gegebener Abstand (d) aufweisen.

7. Behälter nach einem der vorhergehenden Ansprüche, **dadurch gekennzeichnet, dass** besagter Behälter mit einem Endoskoprohr (25) besagten Endoskops gekoppelt ist, das in seinem Inneren besagten Zuführkanal (13) umfasst, wobei besagter Behälter (20) einen Durchmesser aufweist, der im Wesentlichen dem Durchmesser des Endoskoprohrs (25) entspricht oder kleiner als dieser ist, wobei besagtes Gehäuse (100), das auf sich selbst in einer Spirale gewickelt ist, zwei offene Flächen (101d, 101e) orthogonal zu einer Wickelachse (F) umfasst, die jeweils durch eine vordere Abdeckung (12) und eine hintere Abdeckung (14) verschlossen sind, wobei die hintere Abdeckung (24) eine zentrale Öffnung umfasst, d. h. zentral bezüglich einer hinteren Fläche (101e) und der innersten Windung (101₁), zur Kopplung mit besagtem Zuführkanal (13).

8. Behälter nach einem der vorhergehenden Ansprüche, **dadurch gekennzeichnet, dass** besagter Zuführkanal (13) mit Mitteln, insbesondere einer Pumpe, zum Einlass eines Gases bei einer voreingestellten Temperatur, insbesondere Raumtemperatur, gekoppelt ist.

9. Verfahren zum Betrieb des Behälters (10) nach einem der Ansprüche 1 bis 8, **dadurch gekennzeichnet, dass** man besagtem Zuführkanal (13) Mittel, insbesondere eine Pumpe, zum Einlass eines Gases bei einer Reguliertemperatur, insbesondere Raumtemperatur, zuordnet,
die Temperatur besagter Bildaufnahmevorrichtung (11) durch Regulieren besagter Reguliertemperatur reguliert.

## Revendications

1. Conteneur pour appareils de prise d'images vidéo ou photographiques comprenant un boîtier (100) qui inclut un logement (101₁) destiné à loger un appareil de prise d'images (11; 21), ledit boîtier (100) comprenant une fenêtre transparente (12a), dont une surface intérieure fait face à un objectif dudit appareil de prise d'images (11; 21),
ledit conteneur étant **caractérisé en ce que** :
ledit boîtier (100) comprend une feuille (101) enroulée sur elle-même en spirale, en particulier autour d'un axe principal de celle-ci, de manière à définir entre ses propres surfaces en regard un trajet en forme de spirale (101a), ledit logement (101₁) étant compris dans la spire la plus interne dudit trajet en forme de spirale (101a),
ledit conteneur (10; 20) comprenant en outre un conduit de distribution (13) accouplé audit logement (101₁), en particulier audit appareil de prise d'images (11; 21), et configuré pour acheminer un gaz de régulation de température, en particulier de l'air, à une température de régulation donnée, dans ledit logement (101₁) et dans ledit trajet en forme de spirale (101a).

2. Le conteneur selon la revendication 1, **caractérisé en ce que** ledit boîtier (100) enroulé sur lui-même en spirale comprend deux faces ouvertes (101d, 101e) orthogonales à un axe d'enroulement (F), qui sont fermées, respectivement, par un capot avant (12) et un capot arrière (14), ladite fenêtre transparente (12a) étant appliquée pour recouvrir au moins ladite face ouverte avant (101d) dans une région correspondant à ladite spire la plus interne (101₁) afin de fermer une face avant dudit logement, ladite fenêtre transparente (12a) ayant des dimensions telles qu'elle laisse découverte au moins une portion (102) de ladite face avant (101d) et dudit trajet en forme de spirale (101a), ledit capot avant (12) comprenant des moyens de guidage d'écoulement (12c) accouplés à ladite portion découverte (102) de la face avant et configurés pour acheminer ledit gaz, en particulier de l'air, depuis ledit trajet en forme de spirale (101a) le long d'une surface extérieure de ladite fenêtre transparente (12a).

3. Le conteneur selon la revendication 2, **caractérisé en ce que** lesdits moyens de guidage d'écoulement (12c) comprennent un espace défini entre une surface intérieure dudit capot avant (12) et une surface extérieure de ladite fenêtre transparente (12a), ledit capot avant (12) comprenant une ouverture (12g), en particulier à travers laquelle passe un axe optique (F) de l'appareil de prise d'images (11 ; 21), ledit capot avant (12) étant conformé de manière à former au niveau de l'ouverture (12g) un conduit (12m), dont la section de passage s'étend dans un plan sensiblement perpendiculaire à la surface extérieure de la fenêtre transparente (12a), et le périmètre de ladite section de passage est sensiblement tangent à la surface extérieure de la fenêtre transparente (12a).

4. Le conteneur selon la revendication 2, **caractérisé en ce qu'**il comprend une couche d'étanchéité (103) appliquée au moins sur ladite face ouverte avant (101d), en particulier également sur une face extérieure arrière (101e) sur laquelle est appliquée la fenêtre transparente (12a), un passage (102) dans ladite couche d'étanchéité (103) appliquée sur ladite face avant (101d) étant prévu dans une zone correspondant à ladite portion découverte (102) de face avant et étant accouplé auxdits moyens de guidage d'écoulement (12c).

5. Le conteneur selon l'une quelconque des revendications précédentes, **caractérisé en ce que** ledit conduit de distribution (13) comprend un conduit intérieur (13a) pour la distribution du gaz de régulation dans ledit logement (101₁) et un conduit extérieur (13b) coaxial audit conduit intérieur (13a) pour la sortie d'au moins une partie dudit gaz de régulation vers l'extérieur.

6. Le conteneur selon la revendication 1, **caractérisé en ce qu'**il comprend des entretoises (101b) entre les spires (101₁, ..., 101ₙ) pour maintenir lesdites spires (101₁, ..., 101ₙ) à une distance donnée (d), en particulier lesdites entretoises (101b) comprenant des rétrécissements, ayant une épaisseur inférieure à ladite distance donnée (d).

7. Le conteneur selon l'une quelconque des revendications précédentes, **caractérisé en ce que** ledit conteneur est accouplé à un tube d'endoscope (25) dudit endoscope, qui comprend en son sein ledit conduit de distribution (13), ledit conteneur (20) ayant un diamètre correspondant sensiblement au ou inférieur au diamètre du tube d'endoscope (25), ledit boîtier (100) enroulé sur lui-même en spirale comprenant deux faces ouvertes (101d, 101e) orthogonales à un axe d'enroulement (F), qui sont fermées, respectivement, par un capot avant (12) et un capot arrière (14), le capot arrière (24) comprenant une ouverture centrale, c'est-à-dire centrale par rapport à une face arrière (101e) et à la spire la plus interne (101₁), pour l'accouplement audit conduit de distribution (13).

8. Le conteneur selon l'une quelconque des revendications précédentes, **caractérisé en ce que** ledit conduit de distribution (13) est accouplé à des moyens, en particulier une pompe, pour l'admission d'un gaz à une température prédéfinie, en particulier la température ambiante.

9. Procédé de fonctionnement du conteneur (10) selon l'une quelconque des revendications 1 à 8, **caractérisé en ce qu'**on associe audit conduit de distribution (13) des moyens, en particulier une pompe, pour l'admission d'un gaz à une température de régulation, en particulier la température ambiante,
on règle la température dudit appareil de prise d'images (11) en réglant ladite température de régulation.
